# EUROPEAN PATENT SPECIFICATION

(11) **EP 2 317 694 B1**
(45) Date of publication and mention of the grant of the patent: **08.05.2019**
(21) Application number: 08876701.7
(22) Date of filing: 17.12.2008
(51) Int. Cl.: H04W 12/02, H04W 12/10

(54) **METHOD AND SYSTEM AND USER EQUIPMENT FOR PROTOCOL CONFIGURATION OPTION TRANSMISSION**
VERFAHREN UND SYSTEM UND BENUTZERGERÄT ZUR PROTOKOLLKONFIGURATIONS-OPTIONSÜBERTRAGUNG
PROCÉDÉ DE TRANSMISSION D'OPTIONS DE CONFIGURATION DU PROTOCOLE, SYSTÈME ET ÉQUIPEMENT UTILISATEUR S'Y RAPPORTANT

(30) Priority: 06.08.2008 CN 200810134300
(43) Date of publication of application: 04.05.2011
(73) Proprietor: ZTE Corporation, Shenzhen, Guangdong 518057 (CN)
(72) Inventor: XU, Xiaobo, Guangdong 518057 (CN); TU, Xiaoyong, Guangdong 518057 (CN); YE, Minya, Guangdong 518057 (CN); CAI, Jiannan, Guangdong 518057 (CN); DING, Yanjing, Guangdong 518057 (CN); REN, Kui, Guangdong 518057 (CN)
(74) Representative: V.O.
(86) International application number: PCT/CN2008/073556
(87) International publication number: WO 2010/015134

(56) References cited:
- WO-A1-2005/122529
- WO-A1-2008/113804
- CN-A- 1 997 207
- CN-A- 101 155 026
- T-MOBILE ET AL: "Encryption for PAP/CHAP parameters at UE Attach", 3GPP DRAFT; S2-084230, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080516, 16 May 2008 (2008-05-16), XP050266362, [retrieved on 2008-05-16]
- NOKIA SIEMENS NETWORKS: "Pseudo-CR on IMEI Request in security mode control procedure Spec: 3GPP TS 24.301", 3GPP DRAFT; C1-081975-IMEI-REQUEST-24301-020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia; 20080616, 16 June 2008 (2008-06-16), XP050280768, [retrieved on 2008-06-16]
- QUALCOMM EUROPE: "APN indication in the Attach procedure", 3GPP DRAFT; S2-080242 APNALPHATTACH_CR0043, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Marina del Rey; 20080109, 9 January 2008 (2008-01-09), XP050262756, [retrieved on 2008-01-09]

## Description

### Filed of the Invention

The present invention relates to the field of mobile communication techniques, in particular to a method and a system for protocol configuration options transmission, and a user equipment.

### Background of the Invention

System Architecture Evolution (SAE for short) is the next generation mobile wireless network of the 3rd Generation Partnership Project (3GPP for short). In the SAE system, the functions of mobility management, session management, etc. are achieved by means of a Non-Access-Stratum (NAS for short) message between a Mobility Management Entity (MME for short) and a User Equipment (UE for short).

In order to ensure the secure transmission of the NAS message and add the security function of the NAS message, the security function of the NAS message is added in the SAE system, viz. performing encryption and integrity protection for the NAS message, wherein the purpose of the encryption is to prevent the NAS message from illegal interception, and the purpose of the integrity protection is to prevent the NAS message from being revised or destroyed. NAS security association between the MME and the UE is established by a NAS Security Mode Command Procedure. The NAS security command procedure mainly includes that the MME sends a NAS security mode command to the UE and the UE responds to the NAS with a NAS security mode response message.

Protocol Configuration Option (PCO for short) is additional parameter information or a protocol configuration parameter for transferring information between the UE and an external Packet Data Network (PDN for short). Since certain information contained in the PCO is confidential, e.g. user names and passwords of Password Authentication Protocol (PAP for short)/Challenge Handshake Authentication Protocol (CHAP for short), and so on, the security protection must be performed for the PCO with confidential information.

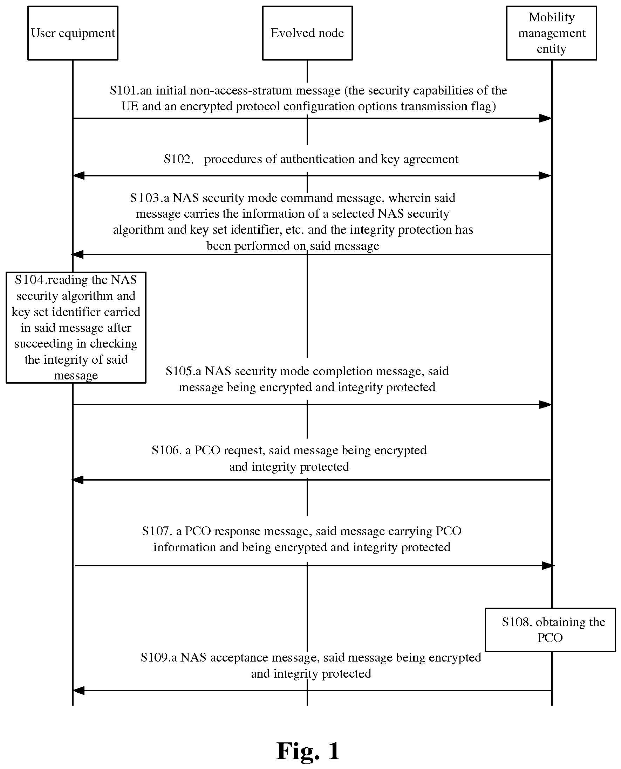

Before the UE accesses a network, the UE must transfer the PCO information to the MME, such that the MME can perform the operations of authentication, etc. Currently, the transfer of the PCO is performed after the NAS security association is established between the UE and the MME. Fig. 1 is a flow chart showing procedures of NAS security establishment and PCO transmission in the prior art. As shown in Fig. 1, said procedures include the following processing processes (step S101 to step S109):
step S101, the UE sends an initial NAS message to the MME, said NAS message carrying all the security capabilities of the UE and also carrying an encrypted PCO transmission flag to inform the MME that the PCO needs encrypted transmission;
step S102, the MME performs the procedures of authentication and key agreement with the UE via the initial NAS message after receiving the above initial NAS message;
step S103, the MME sends a NAS security mode command message to the UE, said message carrying the information of a selected NAS security algorithm and Key Set Identifier (KSI for short), etc. and the integrity protection has been performed on said message;
   specifically, the MME selects a NAS security algorithm after receiving the initial NAS message of the UE, and first performs integrity protection on the NAS message to be sent before subsequently sending the NAS message to the UE, and after the MME makes the information of the NAS security algorithm, the KSI, etc. carried in the NAS security mode command message and sends it to the UE, the NAS message from the UE received subsequently is an encrypted NAS message, and therefore, after sending the NAS security mode command message, the MME begins to wait for receiving the encrypted NAS message;
step S104, the UE accepts the NAS security algorithm carried in the above NAS security mode command message and succeeds in checking the integrity of the NAS security mode command message;
   specifically, after obtaining the information of the NAS security algorithm, the KSI, etc. sent from the MME, the UE begins to prepare for using the NAS security algorithm and the KSI to perform encryption and integrity protection on the message subsequently sent;
step S105, the UE sends the NAS security mode completion message to the MME after using the information of the NAS security algorithm, the KSI, etc. to perform encryption and integrity protection on the NAS security mode;
step S106, the MME decrypts the NAS security mode completion message, and sends a PCO request message to the UE after the integrity check of the message is passed, said PCO request message having been encrypted and integrity protected;
   specifically, the MME is informed that the UE has been ready for receiving the encrypted NAS message after receiving the NAS security mode completion message sent by the UE, and thus begins to prepare for encrypting the NAS message subsequently sent to the UE. Therefore, before the MME sends the PCO request message to the UE, the MME first performs encryption and integrity protection on the PCO request message;
step S107, the UE receives the PCO request message and performs decryption and integrity check, and returns a PCO response message to the MME after the check is passed, wherein the response message carries PCO information and the response message has been encrypted and integrity protected;
step S108, the MME decrypts the PCO response message and checks the integrity of the message, and after the check is passed, the MME obtains the PCO information; and
step 109, the MME continues to perform a UE access procedure and finally sends a NAS acceptance message which has been encrypted and integrity protected to the UE.

From the above procedures, it can be seen that, in the prior art, since it needs to ensure the security of the PCO information, two individual NAS messages-the PCO request message and the PCO request response message-are used after the NAS security mode control procedure is finished to transmit the PCO information of the UE to the MME. This method increases signaling interacting between the UE and the MME, thereby resulting in delay in terms of the UE accessing the network and waste of network resources.

It is noted that the document entitled "Encryption for PAP/CHAP parameters at UE Attach", 3GPP DRAFT; S2-084230, 3RD GENERATION PARTNERSHIP PROJECT (3GPP), SA WG2, Prague; 16 May 2008, discloses encryption for PAP/CHAP parameters at UE Attach. It is further noted that the document entitled "Pseudo-CR on IMEI Request in security mode control procedure Spec: 3GPP TS 24.30" , 3GPP DRAFT; C1-081975-IMEI REQUEST-24301-020, 3RD GENERATION PARTNERSHIP PROJECT (3GPP), SA WG3, Sophia; 16 June 2008, discloses Pseudo-CR on IMEI Request in security mode control procedure. It is noted that the document entitled "APN indication in the Attach procedure", 3GPP DRAFT; S2-080242, 3RD GENERATION PARTNERSHIP PROJECT (3GPP), SA WG2, Marina del Rey; 9 January 2008, discloses APN indication in the Attach procedure.

### Summary of the Invention

The present invention is proposed in consideration of the problems existing in the related techniques of the delay of the UE accessing the network and the waste of network resources due to using two individual NAS messages to transmit the PCO information of the UE to the MME. For this reason, the main object of the present invention is to provide an improved protocol configuration options transmission solution for solving at least one of the above problems in the related techniques.

In order to achieve the above object, a protocol configuration options transmission method is provided according to one aspect of the present invention.

The protocol configuration options transmission method according to the present invention includes: a user equipment sends a non-access-stratum security mode completion message to a mobility management entity after receiving a non-access-stratum security mode command message sent by the mobility management entity, wherein the non-access-stratum security mode completion message carries protocol configuration options; and the mobility management entity obtains the protocol configuration options from the non-access-stratum security mode completion message received.

Preferably, before the user equipment receives the non-access-stratum security mode command message sent by the mobility management entity, the method also includes: the user equipment sends an initial non-access-stratum message carrying a protocol configuration options transmission flag to the mobility management entity; the mobility management entity obtains the protocol configuration options transmission flag carried by the initial non-access-stratum message; and the mobility management entity makes a protocol configuration options request flag in the security mode command message according to the protocol configuration options transmission flag.

Preferably, the operation that the user equipment sends the non-access-stratum security mode completion message to the mobility management entity specifically includes: the user equipment sends the non-access-stratum security mode completion message to the mobility management entity according to the protocol configuration options request flag, wherein the non-access-stratum security mode completion message carries protocol configuration options.

Preferably, the operation that the user equipment sends the non-access-stratum security mode completion message to the mobility management entity specifically includes: the user equipment sends the non-access-stratum security mode completion message carrying the protocol configuration options to the mobility management entity according to predetermined rules.

Preferably, the non-access-stratum security mode command message carries a non-access-stratum security algorithm and a key set identifier for E-UTRAN (eKSI for short); before the user equipment sends the non-access-stratum security mode completion message to the mobility management entity, the method also includes: the user equipment uses the non-access-stratum security algorithm and the key set identifier to perform encryption and integrity protection on the non-access-stratum security mode completion message.

Preferably, the step that the mobility management entity obtains the protocol configuration options from the received non-access-stratum security mode completion message specifically includes: the mobility management entity, after receiving the non-access-stratum security mode completion message, decrypts the non-access-stratum security mode completion message according to the non-access-stratum security algorithm and the key set identifier and obtains the protocol configuration options information.

According to another aspect of the present invention, a user equipment is provided for sending protocol configuration options.

The user equipment according to the present invention includes: a receiving module, configured to receive a non-access-stratum security mode command message sent by the mobility management entity; a sending module, configured to send a non-access-stratum security mode completion message to the mobility management entity, wherein the non-access-stratum security mode completion message carries protocol configuration options.

Preferably, the user equipment may further include: a security module, configured to perform encryption and integrity protection on the non-access-stratum security mode completion message before the sending module sends the non-access-stratum security mode completion message.

According to another aspect of the present invention, a protocol configuration options transmission system is provided.

The protocol configuration options transmission system according to the present invention includes: a mobility management entity, configured to send a non-access-stratum security mode command message to a use equipment; the user equipment, configured to send a non-access-stratum security mode completion message carrying protocol configuration options to the mobility management entity after receiving the non-access-stratum security mode command message of the mobility management entity.

By means of at least one of the above solutions of the present invention, the PCO information is made to be carried in the security mode completion message returned by the UE to the MME so as to solve the problems in the related techniques of the delay of the UE accessing the network and the waste of network resources due to using two individual NAS messages to transmit the PCO information of the UE to the MME, and to reduce the signaling interactions between the UE and the MME and to reduce the waste of network resources.

Other characteristics and advantages of the present invention can be described in the subsequent parts of the description, and are partly obvious from the description or understood by implementing the present invention. The object and other advantages of the present invention can be realized and obtained through the structures particularly mentioned in the description, claims and the drawings.

### Brief Description of the Drawings

The drawings illustrated herein provide a further understanding of the present invention and form a part of the description. The drawings together with the embodiments of the present invention are used to explain the present invention without unduly limiting the present invention, wherein:
Fig. 1 is a flow chart of procedures of NAS security establishment and PCO transmission according to the prior art;
Fig. 2 is an architecture diagram of a SAE system according to the prior art;
Fig. 3 is a structural block diagram of a PCO transmission system according to an embodiment of the present invention;
Fig. 4 is a flow chart of a PCO transmission method according to an embodiment of the present invention;
Fig. 5 is an implementing flow chart of Embodiment 1 of the present invention;
Fig. 6 is an implementing flow chart of Embodiment 2 of the present invention; and
Fig. 7 is a structural block diagram of a user equipment according to an embodiment of the present invention.

### Detailed Description of the Preferred Embodiments

### Functional generalization

In consideration of the problems existing in the related techniques in terms of the delay of the UE accessing the network and the waste of network resources due to using two individual NAS messages to transmit the PCO information of the UE to the MME after the NAS security model control procedure is finished, an embodiment of the present invention provides an improved PCO information transmission solution, in which the PCO information can be transmitted to the MME by carrying the PCO information in the NAS security mode completion message returned by the UE to the MME, wherein the NAS security mode completion message is encrypted and integrity protected.

The preferred embodiments of the present invention will be described hereinafter in combination with the drawings. It shall be understood that the preferred embodiments described herein are merely used for illustrating and explaining the present invention. What needs to be explained is that, if no contradiction arises, the embodiments of the present invention and the features of the embodiments can be combined with one another.

In order to facilitate understanding, the SAE system involved in the embodiment of the present invention is first described concisely before describing the embodiment of the present invention.

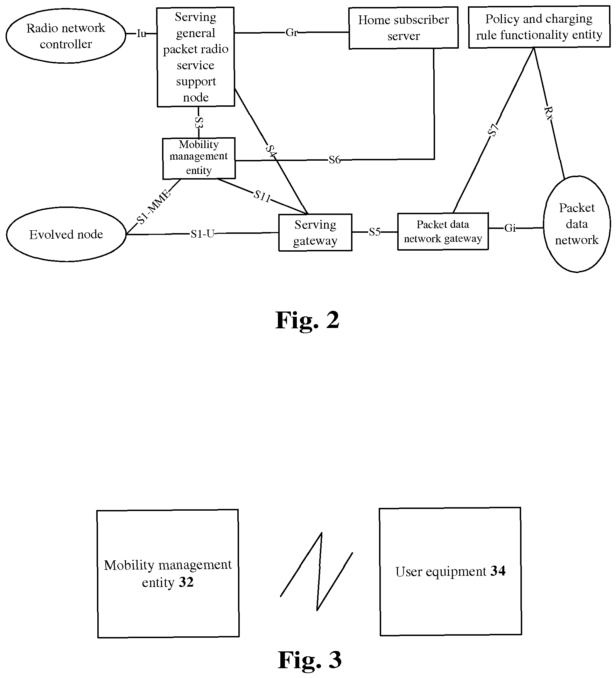

The architecture of the SAE system, as shown in Fig. 2, mainly includes the following network elements:
a Radio Network Controller (RNC for short) which is connected to a Serving General packet radio service support node (SGSN for short) via an Iu interface;
an Evolved Node B (E-Node B for short) which is configured to provide wireless resources for a terminal, connected to a Serving GW via a S1-U interface, and connected to the MME via an S1-MME;
a Home Subscriber Server (HSS for short) which stores permanently user subscription data, is connected to the MME via an S6a interface, and is connected to the SGSN via a Gr interface;
a Packet Data Network (PDN for short) which is configured to provide service for a user, is connected to a PDN GW (PDN gateway) via a SGi interface, and is connected to a Policy and Charging Rule Functionality entity (PCRF for short) via an Rx interface, the PCRF being connected to the PDN GW via an Gx interface;
wherein the Serving Gateway (Serving GW or S-GW for short), the Packet Data Network Gateway (PDN GW or P-GW for short), the Policy and Charging Rule Functionality entity (PCRF for short) and the MME constitute an Evolved Packet Core network (EPC for short), which is capable of reducing delay and allowing the accesses of more wireless access systems. The above respective network elements will be described hereinafter.

The Serving GW is a gateway which is configured to process user plane data routing, terminate downlink data of the UE which are in an idle state, as well as manage and store the SAE bearer context of the UE, such as IP bearer service parameters, inter-network routing information, etc. The Serving GW is an anchor point for inter-3GPP mobility. For each UE associated with the EPS, at a given point of time, there is a single Serving GW, and the Serving GW is connected to the PDN GW via an S5/S8 interface and connected to the MME via an S11 interface.

The PDN GW is a gateway responsible for making the UE access the PDN and assigning user IP addresses and is also a mobile anchor point of the 3GPP and non-3GPP access systems. The user can access multiple PDN GWs at the same time. The Serving GW and the PDN GW might be integrated physically.

The PCRF is mainly configured to make charging rules and Quality of Service (QoS for short) rules for controlling user data transmission according to service information, user subscription information and configuration information of operators. Said functional entity can also be configured to control the establishment and releasing of a bearer in an access network.

The MME is a mobility management entity on a control plane which is responsible for managing and storing the context of the UE (such as UE/user identifier, mobility management state, user security parameters, etc.), assigning a temporary identifier for a user, and authenticating the user when the UE stays in its tracking area or its home network. The MME is connected to the SGSN via an S3 interface and is connected to the serving gateway via the S11 interface.

### System embodiments

According to an embodiment of the present invention, there is first provided a PCO transmission system for realizing PCO transmission. The operation of the system can be under the network architecture as shown in Fig. 2.

Fig. 3 is a structural block diagram of the PCO transmission system according to an embodiment of the present invention. As shown in Fig. 3, the PCO transmission system according to the embodiment of the present invention includes: a mobility management entity (MME) 32 and a user equipment (UE) 34 connected to the MME 32 via a network. The above respective entities will be further described hereinafter in combination with the drawings.

The MME 32 is configured to send a NAS security mode command message to the UE 34, wherein the NAS security mode command message carries a non-access-stratum (NAS) security algorithm and a key set identifier.

The UE 34 is connected to the MME 32 via an internet and is configured to make the PCO carried in a NAS security mode completion message and send it to the MME 32 after receiving a NAS security mode command message of the MME 32.

In order to ensure the security of the PCO, the NAS security algorithm and the key set identifier carried in the NAS security mode command are used in the embodiment of the present invention to perform encryption and integrity protection on the NAS security mode completion message, and then the encrypted and integrity protected NAS security mode completion message is send to the MME 32.

In the above, the NAS security mode command message is used for instructing the UE 34 to perform security association with the MME 32. After the UE 34 receives the message, the message sent to the MME32 will be encrypted and integrity protected during a subsequent process of interacting with the MME 32 if the UE 34 may accept the NAS security algorithm carried in the message. The NAS security mode completion message is a response of the UE 34 to the NAS security mode command message to inform the MME 32 that the UE 34 has received the information of the NAS security algorithm, the KSI, etc. The MME 32 may encrypt the message sent subsequently to the UE 34.

By using the above PCO transmission system according to the embodiment of the present invention, the signaling interaction between the MME and the UE can be reduced when transmitting the PCO.

### Process embodiment

According to an embodiment of the present invention, there is also provided a PCO transmission method. The method can be realized by using the PCO transmission system as shown in Fig. 3.

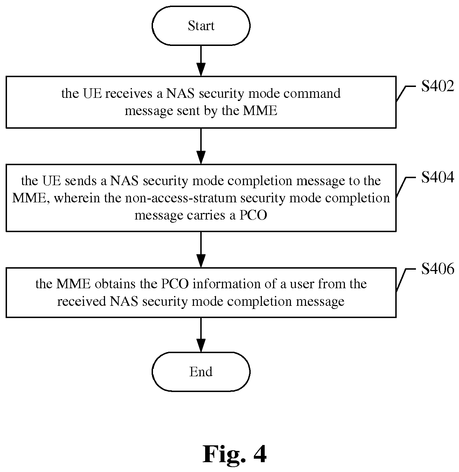

Fig. 4 is a flow chart of a PCO transmission method according to an embodiment of the present invention. What needs to be explained is that the steps shown in the flow chart of the drawings can be implemented in a computer system such as a set of computer-executable instructions. Moreover, although the logical order is shown in the flow chart, the shown or described steps can be implemented in the order different therefrom in certain cases.

As shown in Fig. 4, the PCO transmission method according to the embodiment of the present invention mainly includes the following processing procedures (step S402 to step S406):
step S402, the UE receives a NAS security mode command message sent by the MME, wherein the message carries a NAS security algorithm and a key set identifier;
step S404, the UE sends a NAS security mode completion message to the MME, wherein the non-access-stratum security mode completion message carries the PCO; and
step S406, the MME obtains the PCO information of a user from the received NAS security mode completion message. The details of the above each processing will be further described hereinafter.

### (I) Step S402

As for the triggering for the process of step S402, it can be realized by the following manner: the UE sends an initial NAS message to the MME, wherein the message may carry an encrypted PCO transmission flag or may not carry a PCO transmission flag; the MME sends a NAS security mode command message to the UE after receiving the initial NAS message, if the received initial NAS message carries a PCO transmission flag, the MME makes a PCO request flag carried in the NAS security mode command message sent to the UE, and the MME also makes the information of the selected NAS security algorithm, the KSI, etc. carried in the NAS security mode command message and sends it to the UE for instructing the UE to perform security association.

The UE, after receiving the NAS security mode command message of the MME, reads the carried message therefrom to determine that the information of the NAS security algorithm, the KSI, etc. carried in the NAS security mode command message can be accepted.

### (II) Step S404

In a specific implementing process, the UE can make the PCO information carried in the NAS security mode completion message according to the following two manners.

After the UE receives the NAS security mode command message from the MME, if the message carries a PCO request flag, the UE makes the PCO carried in a NAS security mode completion message in response to the NAS security mode command message according to the PCO request flag, performs the encryption and integrity protection on the NAS security mode completion message using the information of the NAS security algorithm, the KSI, etc. read from the NAS security mode command message, and then sends the NAS security mode completion message to the MME.

If the NAS security mode command message from the MME received by the UE does not carry a PCO request flag, the UE makes the PCO carried in the NAS security mode completion message according to the predetermined setting. Since the NAS security mode command message sent by the MME does not carry the PCO request flag, one initiation mechanism needs to be preset for the purpose of making UE enable to carry the PCO information in the NAS security mode completion message, so as to allow the UE to make the PCO information carried in the NAS security mode completion message sent to the MME.

The above two realizing manners will be described hereinafter in combination with Embodiment 1 and Embodiment 2, respectively.

### (III) Step S406

The MME decrypts the received NAS security mode completion message and performs integrity check, and after the check is passed, the MME obtains the PCO information from the message.

The specific application of the above method will be described hereinafter by taking the process of the UE initiating an attachment process for an example.

### Embodiment 1

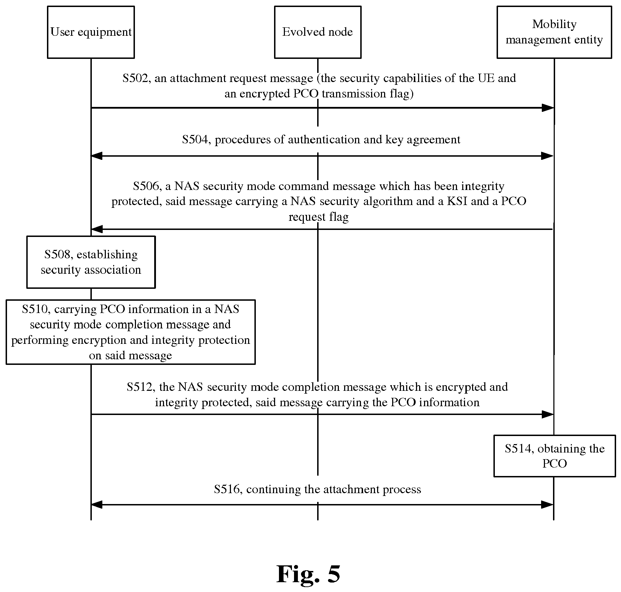

In this embodiment, an attachment request sent by the UE to the MME carries an encrypted PCO transmission flag. The main procedure of the embodiment is as shown in Fig. 5, mainly including the following processing (step S502 to step S516):
step S502, the UE sends an attachment request message to the MME, and said message contains all the security capabilities of the UE as well as carries an encrypted PCO transmission flag, said PCO transmission flag being used for informing the MME that the PCO needs encrypted transmission;
step S504, the MME performs authentication and key agreement with the UE after receiving the attachment request message of the UE;
step S506, the MME sends the NAS security mode command message to the UE after performing integrity protection on the NAS security mode command message, said message carrying the NAS security algorithm and the KSI selected by the MME as well as the PCO request flag, wherein the PCO request flag is used for indicating the UE to carry the PCO information in the subsequent response message;
step S508, the UE establishes the NAS security association with the MME using the information of the NAS security algorithm, KSI, etc. carried by the MME in the NAS security mode command message after receiving the NAS security mode command message of the MME;
step S510, the UE makes the PCO information carried in the NAS security mode completion message sent to the MME according to the PCO request flag carried in the NAS security mode command message and uses the information of the NAS security algorithm, KSI, etc., carried in the NAS security mode command message to perform the encryption and integrity protection on the NAS security mode completion message;
step 512, the UE sends the encrypted and integrity protected NAS security mode completion message to the MME, the message carrying the PCO information;
step 514, the MME decrypts the NAS security mode completion message and performs the integrity check on the message. After the check is passed, the MME obtains the PCO information carried in the NAS security mode completion message; and
step S516, the attachment process is continued.

### Embodiment II

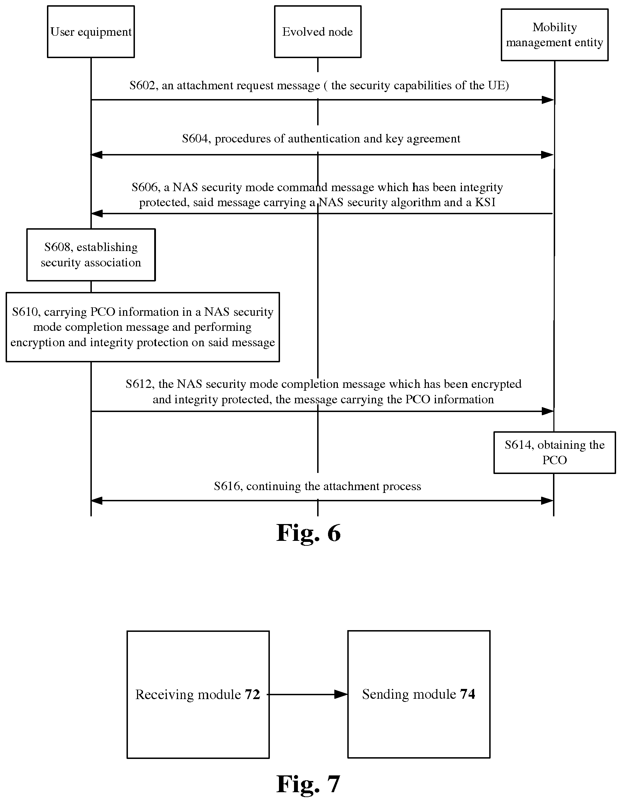

In this Embodiment, the attachment request sent by the UE to the MME does not carry the encrypted PCO transmission flag. The main process of this embodiment, as shown in Fig. 6, mainly includes the following processing (step S602 to step S616):
step S602, the UE initiates an attachment request message to the MME, said message containing all the security capabilities of the UE;
step S604, the MME, after receiving the attachment request message of the UE, performs authentication and key agreement with the UE;
step S606, the MME sends a NAS security mode command message to the UE, said message carrying the NAS security algorithm and the KSI selected by the MME;
step S608, the UE, after receiving the NAS security mode command message of the MME, uses the information of the NAS security algorithm, the KSI, etc. carried by the MME in the NAS security mode command message to establish NAS security association with the MME;
step S610, the UE makes PCO information carried in the NAS security mode completion message sent to the MME according to predetermined settings and uses the information of the NAS security algorithm, the KSI, etc. carried in the NAS security mode command message to perform the encryption and integrity protection on the NAS security mode completion message;
   since the NAS security mode command message sent by the MME does not carry a PCO request flag, an initiation mechanism needs to be preset for the purpose of making the UE enable to carry the PCO information in the NAS security mode completion message, so as to carry the PCO information in the NAS security mode completion message before the UE sends the NAS security mode completion message;
step S612, the UE sends the encrypted and integrity protected NAS security mode completion message to the MME, the message carrying the PCO information;
Step S614, the MME decrypts the NAS security mode completion message and checks the integrity of the message; after the check is passed, the MME obtains the PCO information carried in the NAS security mode completion message; and
step S616, the attachment process is continued.

According to the above PCO transmission method of the embodiment of the present invention, the PCO information is carried in the NAS security mode completion message to be sent to the MME, thereby reducing the signaling interactions between the MME and the UE during the PCO transmission process and reducing the time for the UE to access a network.

### Equipment embodiment

According to an embodiment of the present invention, there is also provided user equipment to realize the above PCO transmission method.

Fig. 7 is a structural block diagram of a UE according to an embodiment of the present invention. As shown in Fig. 7, the UE according to the embodiment of the present invention comprises: a receiving module 72 and a sending module 74. The above respective modules will be described hereinafter in conjunction with the drawings.

The receiving module 72 is configured to receive a NAS security mode command message sent by the MME, wherein the NAS security mode command message carries a NAS security algorithm and a KSI;

The sending module 74 is configured to send the NAS security mode completion message to the MME, wherein the NAS security mode completion message carries the PCO information of the user equipment.

In a specific implementing process, the NAS security mode completion message is encrypted and integrity protected before the sending module 74 sends the NAS security mode completion message in order to ensure the security of the PCO information. Therefore, the user equipment also comprises: a security module which is connected to the receiving module 72 and is configured to perform the encryption and integrity protection on the NAS security mode completion message before the sending model 74 sends the NAS security mode completion message.

By using the UE provided in this embodiment, in the case of not receiving the PCO request message sent by the MME, the PCO information is sent to the MME by being carried in the NAS security mode completion message.

As described above, by means of the technical solution provided in the present invention, after the UE receives the NAS security mode command message from the MME, the PCO information is carried in the NAS security mode completion message, and the NAS security mode completion message is encrypted and integrity protected to be sent to the MME, thereby ensuring the security of the PCO transmission. Further, the signaling interaction between the UE and the MME is reduced to reduce the waste of network resources, save the time for the UE to access a network, and raise the efficiency for the UE accessing the network.

The descriptions above are only preferable embodiments of the present invention, which are not used to restrict the present invention. For those skilled in the art, the present invention may have various changes and variations within the scope of protection defined by the appended claims.

## Claims

1. A protocol configuration options transmission method which relates to the transmission of protocol configuration options in a network according to a system architecture evolution, comprising:
a user equipment sends a non-access-stratum security mode completion message to a mobility management entity (404) after receiving a non-access-stratum security mode command message sent by the mobility management entity (402),
**characterised in that** the non-access-stratum security mode completion message carries protocol configuration options; and
the mobility management entity obtains the protocol configuration options from the non-access-stratum security mode completion message received (406).

2. The method according to Claim 1, **characterized in that** before the user equipment receives the non-access-stratum security mode command message sent by the mobility management entity, the method also includes that:
the user equipment sends an initial non-access-stratum message carrying a protocol configuration options transmission flag to the mobility management entity;
the mobility management entity obtains the protocol configuration options transmission flag carried by the initial non-access-stratum message; and
the mobility management entity carries a protocol configuration options request flag in the security mode command message according to the protocol configuration options transmission flag.

3. The method according to Claim 2, **characterized in that** the step that the user equipment sends the non-access-stratum security mode completion message to the mobility management entity includes:
the user equipment sends the non-access-stratum security mode completion message to the mobility management entity according to the protocol configuration options request flag, wherein the non-access-stratum security mode completion message carries the protocol configuration options.

4. The method according to Claim 1, **characterized in that** the step that the user equipment sends the non-access-stratum security mode completion message to the mobility management entity includes:
the user equipment sends the non-access-stratum security mode completion message carrying the protocol configuration options to the mobility management entity according to predetermined rules.

5. The method according to Claim 1, **characterized in that**
the non-access-stratum security mode command message carries a non-access-stratum security algorithm and a key set identifier;
before the user equipment sends the non-access-stratum security mode completion message to the mobility management entity, the method also includes that:
the user equipment uses the non-access-stratum security algorithm and the key set identifier to perform encryption and integrity protection on the non-access-stratum security mode completion message.

6. The method according to Claim 5, **characterized in that** the step that the mobility management entity obtains the protocol configuration options from the received non-access-stratum security mode completion message specifically includes:
the mobility management entity, after receiving the non-access-stratum security mode completion message, decrypts the non-access-stratum security mode completion message according to the non-access-stratum security algorithm and the key set identifier and obtains the protocol configuration options information.

7. A user equipment which relates to the transmission of protocol configuration options in a network according to a system architecture evolution, comprising:
a receiving module (72), configured to receive a non-access-stratum security mode command message sent by a mobility management entity; and
a sending module (74), configured to send a non-access-stratum security mode completion message to the mobility management entity, **characterised in that** the non-access-stratum security mode completion message carries protocol configuration options.

8. The user equipment according to Claim 7, **characterized in that** the user equipment further includes:
a security module, configured to perform encryption and integrity protection on the non-access-stratum security mode completion message before the sending module sends the non-access-stratum security mode completion message.

9. A protocol configuration options transmission system which relates to the transmission of protocol configuration options in a network according to a system architecture evolution, comprising a mobility management entity, wherein
the mobility management entity is configured to send a non-access-stratum security mode command message to a user equipment; **characterised in that**
the user equipment is configured to send a non-access-stratum security mode completion message carrying protocol configuration options to the mobility management entity after receiving the non-access-stratum security mode command message of the mobility management entity.

## Patentansprüche

1. Übertragungsverfahren für Protokollkonfigurationsoptionen, das sich auf die Übertragung von Protokollkonfigurationsoptionen in einem Netzwerk gemäß einer Weiterentwicklung der Systemarchitektur bezieht, umfassend:
eine Benutzerausrüstung sendet eine Meldung über die Beendigung des Nicht-Zugriffs-Stratum-Sicherheitsmodus an eine Mobilitätsmanagementeinheit (404), nachdem sie eine Meldung über die Beendigung des Nicht-Zugriffs-Stratum-Sicherheitsmodus empfangen hat, die von der Mobilitätsmanagementeinheit (402) gesendet wurde, **dadurch gekennzeichnet, dass**
die Meldung über die Beendigung des Nicht-Zugriffs-Stratum-Sicherheitsmodus Protokollkonfigurationsoptionen enthält; und
die Mobilitätsmanagementeinheit die Protokollkonfigurationsoptionen von der erhaltenen Meldung über die Beendigung des Nicht-Zugriffs-Stratum-Sicherheitsmodus (406) erhält.

2. Verfahren nach Anspruch 1, **dadurch gekennzeichnet, dass**, die Benutzerausrüstung vorher die von der Mobilitätsmanagementeinheit gesendete Meldung über die Beendigung des Nicht-Zugriffs-Stratum-Sicherheitsmodus empfängt, das Verfahren umfasst außerdem dass:
die Benutzerausrüstung eine anfängliche Meldung über das Nicht-Zugriffs-Stratum, die ein Übertragungsflag von Protokollkonfigurationsoptionen enthält, an die Mobilitätsmanagementeinheit sendet;
die Mobilitätsmanagementeinheit das Übertragungsflag von Protokollkonfigurationsoptionen erhält, das in der anfänglichen Meldung über das Nicht-Zugriffs-Stratum enthalten ist; und
die Mobilitätsmanagementeinheit ein Anforderungsflag für Protokollkonfigurationsoptionen in der Sicherheitsmodusbefehlsmeldung gemäß dem Übertragungsflag von Protokollkonfigurationsoptionen enthält.

3. Verfahren nach Anspruch 2, **dadurch gekennzeichnet, dass** der Schritt, bei dem die Benutzerausrüstung die Meldung über die Beendigung des Nicht-Zugriffs-Stratum-Sicherheitsmodus an die Mobilitätsmanagementeinheit sendet, Folgendes umfasst:
die Benutzerausrüstung sendet die Meldung über die Beendigung des Nicht-Zugriffs-Stratum-Sicherheitsmodus gemäß dem Anforderungsflag der Protokollkonfigurationsoptionen an die Mobilitätsmanagementeinheit, wobei die Meldung über die Beendigung des Nicht-Zugriffs-Stratum-Sicherheitsmodus die Protokollkonfigurationsoptionen enthält.

4. Verfahren nach Anspruch 1, **dadurch gekennzeichnet, dass** der Schritt, bei dem die Benutzerausrüstung die Meldung über die Beendigung des Nicht-Zugriffs-Stratum-Sicherheitsmodus an die Mobilitätsmanagementeinheit sendet, Folgendes umfasst:
die Benutzerausrüstung sendet die Meldung über die Beendigung des Nicht-Zugriffs-Stratum-Sicherheitsmodus, die die Protokollkonfigurationsoptionen enthält, gemäß vorbestimmten Regeln an die Mobilitätsmanagementeinheit.

5. Verfahren nach Anspruch 1, **dadurch gekennzeichnet, dass**
die Befehlsmeldung des Nicht-Zugriffs-Stratum-Sicherheitsmodus einen Nicht-Zugriffs-Stratum-Sicherheitsalgorithmus und einen Schlüsselsatz-Identifikator enthält;
die Benutzerausrüstung vorher die Meldung über die Beendigung des Nicht-Zugriffs-Stratum-Sicherheitsmodus an die Mobilitätsmanagementeinheit sendet, das Verfahren umfasst außerdem Folgendes:
die Benutzerausrüstung verwendet den Nicht-Zugriffs-Stratum-Sicherheitsalgorithmus und den Schlüsselsatz-Identifikator, um Verschlüsselung und Integritätsschutz für die Meldung über die Beendigung des Nicht-Zugriffs-Stratum-Sicherheitsmodus durchzuführen.

6. Verfahren nach Anspruch 5, **dadurch gekennzeichnet, dass** der Schritt, dass die Mobilitätsmanagementeinheit die Protokollkonfigurationsoptionen aus der empfangenen Meldung über die Beendigung des Nicht-Zugriffs-Stratum-Sicherheitsmodus erhält, insbesondere Folgendes umfasst:
die Mobilitätsmanagementeinheit entschlüsselt nach Erhalt der Meldung über die Beendigung des Nicht-Zugriffs-Stratum-Sicherheitsmodus die Meldung über die Beendigung des Nicht-Zugriffs-Stratum-Sicherheitsmodus gemäß dem Nicht-Zugriffs-Stratum-Sicherheitsalgorithmus und dem Schlüsselsatz-Identifikator und erhält die Informationen über die Protokollkonfigurationsoptionen.

7. Benutzerausrüstung, die sich auf die Übertragung von Protokollkonfigurationsoptionen in einem Netzwerk gemäß einer Weiterentwicklung der Systemarchitektur bezieht, umfassend:
ein Empfangsmodul (72), das zum Empfangen einer von einer Mobilitätsmanagementeinheit gesendeten Befehlsmeldung des Nicht-Zugriffs-Stratum-Sicherheitsmodus konfiguriert ist; und
ein Sendemodul (74), das so konfiguriert ist, dass es eine Meldung über die Beendigung des Nicht-Zugriffs-Stratum-Sicherheitsmodus an die Mobilitätsmanagementeinheit sendet, **dadurch gekennzeichnet, dass**
die Meldung über die Beendigung des Nicht-Zugriffs-Stratum-Sicherheitsmodus Protokollkonfigurationsoptionen enthält.

8. Benutzerausrüstung nach Anspruch 7, **dadurch gekennzeichnet, dass** die Benutzerausrüstung weiter Folgendes umfasst:
ein Sicherheitsmodul, das so konfiguriert ist, dass es einen Verschlüsselungs- und Integritätsschutz für die Meldung über die Beendigung des Nicht-Zugriffs-Stratum-Sicherheitsmodus durchführt, bevor das Sendemodul die Meldung über die Beendigung des Nicht-Zugriffs-Stratum-Sicherheitsmodus sendet.

9. Übertragungssystem für Protokollkonfigurationsoptionen, das sich auf die Übertragung von Protokollkonfigurationsoptionen in einem Netzwerk gemäß einer Weiterentwicklung der Systemarchitektur bezieht, die eine Mobilitätsmanagementeinheit umfasst, wobei
die Mobilitätsmanagementeinheit so konfiguriert ist, dass sie eine Befehlsmeldung des Nicht-Zugriffs-Stratum-Sicherheitsmodus an eine Benutzerausrüstung sendet; **dadurch gekennzeichnet, dass**
die Benutzerausrüstung so konfiguriert ist, dass sie die Meldung über die Beendigung des Nicht-Zugriffs-Stratum-Sicherheitsmodus, die Protokollkonfigurationsoptionen enthält, an die Mobilitätsmanagementeinheit sendet, nachdem die Befehlsmeldung des Nicht-Zugriffs-Stratum-Sicherheitsmodus der Mobilitätsmanagementeinheit empfangen wurde.

## Revendications

1. Méthode de transmission d'options de configuration de protocole qui concerne la transmission d'options de configuration de protocole dans un réseau en fonction d'une évolution d'architecture de système, comprenant :
un équipement utilisateur envoie un message d'achèvement de mode de sécurité de strate de non accès à une entité de gestion de mobilité (404) après la réception d'un message de commande de mode de sécurité de strate de non accès envoyé par l'entité de gestion de mobilité (402), **caractérisée en ce que**
le message d'achèvement de mode de sécurité de strate de non accès transporte des options de configuration de protocole ; et
l'entité de gestion de mobilité obtient les options de configuration de protocole à partir du message d'achèvement de mode de sécurité de strate de non accès reçu (406).

2. Méthode selon la revendication 1, **caractérisée en ce que**, avant que l'équipement utilisateur reçoive le message de commande de mode de sécurité de strate de non accès envoyé par l'entité de gestion de mobilité, la méthode inclut également que :
l'équipement utilisateur envoie un message de strate de non accès initial transportant un indicateur de transmission d'options de configuration de protocole à l'entité de gestion de mobilité ;
l'entité de gestion de mobilité obtient l'indicateur de transmission d'options de configuration de protocole à partir du message de strate de non accès initial ; et
l'entité de gestion de mobilité transporte un indicateur de demande d'options de configuration de protocole dans le message de commande de mode de sécurité en fonction de l'indicateur de transmission d'options de configuration de protocole.

3. Méthode selon la revendication 2, **caractérisée en ce que** l'étape où l'équipement utilisateur envoie le message d'achèvement de mode de sécurité de strate de non accès à l'entité de gestion de mobilité inclut :
l'équipement utilisateur envoie le message d'achèvement de mode de sécurité de strate de non accès à l'entité de gestion de mobilité en fonction de l'indicateur de demande d'options de configuration de protocole, dans laquelle le message d'achèvement de mode de sécurité de strate de non accès transporte les options de configuration de protocole.

4. Méthode selon la revendication 1, **caractérisée en ce que** l'étape où l'équipement utilisateur envoie un message d'achèvement de mode de sécurité de strate de non accès à l'entité de gestion de mobilité inclut :
l'équipement utilisateur envoie le message d'achèvement de mode de sécurité de strate de non accès transportant les options de configuration de protocole à l'entité de gestion de mobilité en fonction de règles prédéterminées.

5. Méthode selon la revendication 1, **caractérisée en ce que**
le message de commande de mode de sécurité de strate de non accès transporte un algorithme de sécurité de strate de non accès et un identificateur de jeu de clés ;
avant que l'équipement utilisateur envoie le message d'achèvement de mode de sécurité de strate de non accès à l'entité de gestion de mobilité, la méthode inclut également que :
l'équipement utilisateur utilise l'algorithme de sécurité de strate de non accès et l'identificateur de jeu de clés pour effectuer un cryptage et une protection d'intégrité sur le message d'achèvement de mode de sécurité de strate de non accès.

6. Méthode selon la revendication 5, **caractérisée en ce que** l'étape où l'entité de gestion de mobilité obtient les options de configuration de protocole à partir du message d'achèvement de mode de sécurité de strate de non accès inclut de manière spécifique :
l'entité de gestion de mobilité, après la réception du message d'achèvement de mode de sécurité de strate de non accès, décrypte le message d'achèvement de mode de sécurité de strate de non accès en fonction de l'algorithme de sécurité de strate de non accès et l'identificateur de jeu de clés et obtient les informations d'options de configuration de protocole.

7. Equipement utilisateur qui concerne la transmission d'options de configuration de protocole dans un réseau en fonction d'une évolution d'architecture de système, comprenant :
un module de réception (72), configuré pour recevoir un message de commande de mode de sécurité de strate de non accès envoyé par une entité de gestion de mobilité ; et
un module de transmission (74) configuré pour envoyer un message d'achèvement de mode de sécurité de strate de non accès à l'entité de gestion de mobilité, **caractérisé en ce que** le message d'achèvement de mode de sécurité de strate de non accès transporte des options de configuration de protocole.

8. Equipement utilisateur selon la revendication 7, **caractérisé en ce que** l'équipement utilisateur inclut en outre :
un module de sécurité configuré pour effectuer un cryptage et une protection d'intégrité sur le message d'achèvement de mode de sécurité de strate de non accès avant que le module de transmission envoie le message d'achèvement de mode de sécurité de strate de non accès.

9. Système de transmission d'options de configuration de protocole qui concerne la transmission d'options de configuration de protocole dans un réseau en fonction d'une évolution d'architecture de système, comprenant une entité de gestion de mobilité, dans lequel
l'entité de gestion de mobilité est configurée pour envoyer un message de commande de mode de sécurité de strate de non accès à un équipement utilisateur ; **caractérisé en ce que**
l'équipement utilisateur est configuré pour envoyer un message d'achèvement de mode de sécurité de strate de non accès transportant des options de configuration de protocole à l'entité de gestion de mobilité après la réception du message de commande de mode de sécurité de strate de non accès de l'entité de gestion de mobilité.
